# EUROPEAN PATENT APPLICATION

(11) **EP 3 104 641 A1**
(43) Date of publication of application: **14.12.2016**
(21) Application number: 14883711.5
(22) Date of filing: 28.02.2014
(51) Int. Cl.: H04W 28/04

(54) **DATA RETRANSMISSION METHOD AND DEVICE**

(71) Applicant: Huawei Technologies Co., Ltd., Longgang District Shenzhen, Guangdong 518129 (CN)
(72) Inventor: ZENG, Qinghai, Shenzhen Guangdong 518129 (CN); ZHANG, Jian, Shenzhen Guangdong 518129 (CN)
(74) Representative: Gill Jennings & Every LLP
(86) International application number: PCT/CN2014/072753
(87) International publication number: WO 2015/127670

(57) **Abstract**

Embodiments of the present invention relate to the communications field, and provide a data retransmission method and apparatus, which can improve efficiency of data retransmission and reduce a retransmission delay. The method includes: sending, by a splitting end apparatus, data to a convergence end apparatus by using a first link; and when it is determined that a data unit that is not received by the convergence end apparatus exists in the data, instructing, by the splitting end apparatus, the first link to stop transmitting, to the convergence end apparatus, the data unit that is not received by the convergence end apparatus, and retransmitting the data unit to the convergence end apparatus by using a second link. The embodiments of the present invention are used for data retransmission.

## Description

### TECHNICAL FIELD

The present invention relates to the communications field, and in particular, to a data retransmission method and apparatus.

### BACKGROUND

With development of mobile communications technologies, the 3rd Generation Partnership Project imposes higher requirements on a peak data transmission rate, a system bandwidth, and the like. To meet these requirements, in the prior art, a same terminal may communicate with multiple base stations simultaneously or in a time-sharing manner, where the multiple base stations include one primary base station and at least one secondary base station.

Data sent on a downlink to the terminal by the primary base station and the at least one secondary base station simultaneously or in a time-sharing manner is split by using a PDCP (Packet Data Convergence Protocol, Packet Data Convergence Protocol) layer of the primary base station. That is, the primary base station allocates, to the different base stations, data that needs to be transmitted to the terminal, so as to transmit the data. The data received by the terminal from the different base stations converges at a PDCP layer of the terminal. Data sent by the terminal on an uplink to the base stations is split by using the PDCP layer of the terminal. The data received by the primary base station from the terminal and the data received from the secondary base station converge at the PDCP layer of the primary base station. The PDCP layer supports a reordering function, so as to implement sequential submission of data to upper layers during data convergence.

In the foregoing process, because wireless network signals between different base stations have different strength and different base stations have different data transmission rates, if a phenomenon of a temporary packet loss occurs when one of the base stations is transmitting data, before reordering can succeed, the PDCP layer needs to wait for the base station to successfully retransmit data in the packet loss. Therefore, in both a downlink and an uplink, a case in which a problem occurs on one base station to affect overall efficiency of transmission may exist. When a base station on which a problem occurs has a very poor wireless network signal condition, a probability that retransmission fails is relatively high. Therefore, repeated retransmission by a base station on which a problem occurs not only causes a waste of bandwidth, but also increases a delay, affecting an overall data transmission rate of the terminal.

### SUMMARY

The present invention provides a data retransmission method and apparatus, which can improve efficiency of data retransmission and reduce a retransmission delay.

To achieve the foregoing objectives, the following technical solutions are used in the present invention:

A first aspect provides a splitting end apparatus, including:
a sending unit, configured to send data to a convergence end apparatus by using a first link; and
an instruction unit, configured to instruct the first link to stop transmitting, to the convergence end apparatus, a data unit that is not received by the convergence end apparatus, where the data includes the data unit, where
the sending unit is further configured to retransmit the data unit to the convergence end apparatus by using a second link.

In a first possible implementation manner of the first aspect, the splitting end apparatus further includes a determining unit, configured to: determine a sequence number of a to-be-confirmed data unit in the data and a sequence number of a to-be-sent data unit in the splitting end apparatus; and
if an interval between the sequence number of the to-be-confirmed data unit and the sequence number of the to-be-sent data unit meets a preset difference condition, determine that a data unit corresponding to the sequence number of the to-be-confirmed data unit is the data unit that is not received by the convergence end apparatus.

With reference to the first aspect, in a second possible implementation manner, the splitting end apparatus further includes a determining unit, configured to: determine a time during which a sequence number of a to-be-confirmed data unit in the data is not updated;
when the time during which the sequence number of the to-be-confirmed data unit is not updated meets a preset time threshold, determine that a data unit corresponding to the sequence number of the to-be-confirmed data unit is the data unit that is not received by the convergence end apparatus.

With reference to the first aspect, in a third possible implementation manner, the splitting end apparatus further includes a receiving unit, configured to receive a status report sent by the convergence end apparatus, where the status report includes indication information of a sequence number of the data unit that is not received by the convergence end apparatus and that is in the data; and
the splitting end apparatus further includes a determining unit, configured to determine, according to the indication information, the data unit that is not received by the convergence end apparatus.

With reference to any possible implementation manner of the first aspect to the third possible implementation manner, in a fourth possible implementation manner, the sending unit is further configured to send a link switching message to a Radio Link Control RLC layer of the first link, where the link switching message includes indication information of a maximum sequence number of all sequence numbers of data units, so that the RLC layer stops, according to the indication information of the maximum sequence number, transmitting a data unit corresponding to the maximum sequence number and a data unit whose sequence number is less than the maximum sequence number.

With reference to any possible implementation manner of the first aspect to the fourth possible implementation manner, in a fifth possible implementation manner, if a confirmation mode is used in the RLC layer of the first link, a processing unit is configured to adjust a status variable in a sending window of the RLC layer of the first link, where the status variable in the sending window includes a sequence number of a next to-be-confirmed data unit in the data and a sequence number of a next to-be-sent data unit in the data; and
the instruction unit is further configured to instruct the first link to adjust a status variable in a receiving window of the RLC layer of the first link.

With reference to any possible implementation manner of the first aspect to the fourth possible implementation manner, in a sixth possible implementation manner, the splitting end apparatus further includes a processing unit, if a non-confirmation mode is used in the RLC layer of the first link, the processing unit is configured to adjust a status variable in a sending window of the RLC layer of the first link, where the status variable in the sending window includes a sequence number of a next to-be-sent data unit in the data.

With reference to any possible implementation manner of the first aspect to the second possible implementation manner, in a seventh possible implementation manner, the splitting end apparatus further includes a receiving unit, configured to receive a first link failure message, where the first link failure message includes a first link failure message sent by the convergence end apparatus or a first link failure message sent by a sending apparatus corresponding to the first link; and
the splitting end apparatus further includes a processing unit, configured to initiate a first link deletion process according to the first link failure message received by the receiving unit.

With reference to any possible implementation manner of the first aspect to the seventh possible implementation manner, in an eighth possible implementation manner, the data unit is a Packet Data Convergence PDCP data unit.

A second aspect provides a convergence end apparatus, including:
a sending unit, configured to send, to a splitting end apparatus, a status report indicating a data unit that is not received by the convergence end apparatus, so that the splitting end apparatus instructs, according to the status report, a first link to stop transmitting the data unit to the convergence end apparatus, and retransmits the data unit to the convergence end apparatus by using a second link, where
the status report includes indication information of a sequence number of the data unit, and data sent by the splitting end apparatus to the convergence end apparatus by using the first link includes the data unit.

In a first possible implementation manner of the second aspect, the convergence end apparatus further includes a determining unit, configured to: determine a sequence number of a to-be-received data unit in the data and a maximum sequence number of a data unit already received by the convergence end apparatus; and
if an interval between the sequence number of the to-be-received data unit and the maximum sequence number of the already received data unit meets a preset difference condition, determine that a data unit corresponding to the sequence number of the to-be-received data unit is the data unit that is not received by the convergence end apparatus.

With reference to the second aspect, in a second possible implementation manner, the convergence end apparatus further includes a determining unit, configured to: determine a time during which a sequence number of a to-be-received data unit in the data is not updated; and
when the time during which the sequence number of the to-be-received data unit is not updated meets a preset time threshold, determine that a data unit corresponding to the sequence number of the to-be-received data unit is the data unit that is not received by the convergence end apparatus.

With reference to any possible implementation manner of the first aspect to the second possible implementation manner, in a third possible implementation manner, the convergence end apparatus further includes a processing unit, configured to adjust a status variable in a receiving window of an RLC layer of the first link, where the status variable in the receiving window includes a sequence number of a next to-be-received data unit in the data and the maximum sequence number of the already received data unit in the data.

With reference to the third possible implementation manner, in a fourth possible implementation manner, the splitting end apparatus further includes an instruction unit, configured to instruct the first link to adjust a status variable in a sending window of the RLC layer of the first link.

With reference to any possible implementation manner of the first aspect to the second possible implementation manner, in a fifth possible implementation manner, the sending unit is further configured to, send a first link failure message to the splitting end apparatus, so that the splitting end apparatus initiates a first link deletion process according to the status report and the first link failure message.

With reference to any possible implementation manner of the first aspect to the fifth possible implementation manner, in a sixth possible implementation manner, the data unit includes a PDCP data unit.

A third aspect provides a base station, where the base station includes the splitting end apparatus according to any possible implementation manner of the first aspect to the eighth possible implementation manner; or the base station includes the convergence end apparatus according to any possible implementation manner of the second aspect to the sixth possible implementation manner.

A fourth aspect provides a terminal, where the terminal includes the splitting end apparatus according to any possible implementation manner of the first aspect to the eighth possible implementation manner; or the terminal includes the convergence end apparatus according to any possible implementation manner of the second aspect to the sixth possible implementation manner.

A fifth aspect provides a data retransmission method, including:
sending, by a splitting end apparatus, data to a convergence end apparatus by using a first link;
instructing, by the splitting end apparatus, the first link to stop transmitting, to the convergence end apparatus, a data unit that is not received by the convergence end apparatus, where the data includes the data unit; and
retransmitting, by the splitting end apparatus, the data unit to the convergence end apparatus by using a second link.

In a first possible implementation manner of the fifth aspect, the method further includes:
determining a sequence number of a to-be-confirmed data unit in the data and a sequence number of a to-be-sent data unit in the splitting end apparatus; and
if an interval between the sequence number of the to-be-sent data unit and the sequence number of the to-be-confirmed data unit meets a preset difference condition, determining that a data unit corresponding to the sequence number of the to-be-confirmed data unit is the data unit that is not received by the convergence end apparatus.

With reference to the fifth aspect, in a second possible implementation manner, the method further includes:
determining a time during which a sequence number of a to-be-confirmed data unit in the data is not updated; and
when the time during which the sequence number of the to-be-confirmed data unit is not updated meets a preset time threshold, determining that a data unit corresponding to the sequence number of the to-be-confirmed data unit is the data unit that is not received by the convergence end apparatus.

With reference to the fifth aspect, in a third possible implementation manner, the method further includes:
receiving a status report sent by the convergence end apparatus, where the status report includes indication information of a sequence number of the data unit that is not received by the convergence end apparatus and that is in the data; and
determining, according to the indication information, the data unit that is not received by the convergence end apparatus.

With reference to any possible implementation manner of the fifth aspect to the third possible implementation manner, in a fourth possible implementation manner, the instructing the first link to stop transmitting, to the convergence end apparatus, a data unit that is not received by the convergence end apparatus includes:
sending a link switching message to an RLC layer of the first link, where the link switching message includes indication information of a maximum sequence number of all sequence numbers of data units, so that the RLC layer stops, according to the indication information of the maximum sequence number, transmitting a data unit corresponding to the maximum sequence number and a data unit whose sequence number is less than the maximum sequence number.

With reference to any possible implementation manner of the fifth aspect to the fourth possible implementation manner, in a fifth possible implementation manner, if a confirmation mode is used in the RLC layer of the first link, the method further includes:
adjusting a status variable in a sending window of the RLC layer of the first link, where the status variable in the sending window includes a sequence number of a next to-be-confirmed data unit in the data and a sequence number of a next to-be-sent data unit in the data; and
instructing the first link to adjust a status variable in a receiving window of the RLC layer of the first link.

With reference to any possible implementation manner of the fifth aspect to the fourth possible implementation manner, in a sixth possible implementation manner, if a non-confirmation mode is used in the RLC layer of the first link, the method further includes:
adjusting a status variable in a sending window of the RLC layer of the first link, where the status variable in the sending window includes a sequence number of a next to-be-sent data unit in the data.

With reference to any possible implementation manner of the fifth aspect to the second possible implementation manner, in a seventh possible implementation manner, the method further includes: receiving a first link failure message; and initiating a first link deletion process according to the first link failure message.

With reference to any possible implementation manner of the fifth aspect to the seventh possible implementation manner, in an eighth possible implementation manner, the data unit is a PDCP data unit.

A sixth aspect provides a data retransmission method, including:
sending, by a convergence end apparatus to a splitting end apparatus, a status report indicating a data unit that is not received by the convergence end apparatus, so that the splitting end apparatus instructs, according to the status report, a first link to stop transmitting the data unit to the convergence end apparatus, and retransmits the data unit to the convergence end apparatus by using a second link, where
the status report includes indication information of a sequence number of the data unit, and data sent by the splitting end apparatus to the convergence end apparatus by using the first link includes the data unit.

In a first possible implementation manner of the sixth aspect, the method further includes:
determining a sequence number of a to-be-received data unit in the data and a maximum sequence number of a data unit already received by the convergence end apparatus;
if an interval between the sequence number of the to-be-received data unit and the maximum sequence number of the already received data unit meets a preset difference condition, determining that a data unit corresponding to the sequence number of the to-be-received data unit is the data unit that is not received by the convergence end apparatus.

With reference to the sixth aspect, in a second possible implementation manner, the method further includes:
determining a time during which a sequence number of a to-be-received data unit in the data is not updated; and
when the time during which the sequence number of the to-be-received data unit is not updated meets a preset time threshold, determining that a data unit corresponding to the sequence number of the to-be-received data unit is the data unit that is not received by the convergence end apparatus.

With reference to any possible implementation manner of the sixth aspect to the second possible implementation manner, in a third possible implementation manner, the method further includes:
adjusting a status variable in a receiving window of an RLC layer of the first link, the status variable in the receiving window includes a sequence number of a next to-be-received data unit in the data and the maximum sequence number of the already received data unit in the data.

With reference to the third possible implementation manner, in a fourth possible implementation manner, the method further includes:
instructing the first link to adjust a status variable in a sending window of the RLC layer of the first link.

With reference to any possible implementation manner of the sixth aspect to the second possible implementation manner, in a fifth possible implementation manner, the method further includes:
sending a first link failure message to the splitting end apparatus, so that the splitting end apparatus initiates a first link deletion process according to the status report and the first link failure message.

With reference to any possible implementation manner of the sixth aspect to the fifth possible implementation manner, in a sixth possible implementation manner, the data unit includes a PDCP data unit.

By means of the foregoing solutions, a splitting end apparatus sends data to a convergence end apparatus by using a first link; and when it is determined that a data unit that is not received by the convergence end apparatus exists in the data, the splitting end apparatus instructs the first link to stop transmitting, to the convergence end apparatus, the data unit that is not received by the convergence end apparatus, and retransmits the data unit to the convergence end apparatus by using a second link. In this way, when a problem occurs in data transmission on the first link, the splitting end apparatus may perform switching for the data unit that is on the first link and that is not sent to the convergence end apparatus, so that the data unit is transmitted by using the second link having a higher transmission rate, thereby improving efficiency of data retransmission and reducing a retransmission delay.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a splitting end apparatus according to an embodiment of the present invention;
FIG. 2 is a schematic structural diagram of a convergence end apparatus according to an embodiment of the present invention;
FIG. 3 is a schematic structural diagram of another splitting end apparatus according to an embodiment of the present invention;
FIG. 4 is a schematic structural diagram of another convergence end apparatus according to an embodiment of the present invention;
FIG. 5a is a schematic structural diagram of a base station according to an embodiment of the present invention;
FIG. 5b is a schematic structural diagram of another base station according to an embodiment of the present invention;
FIG. 6a is a schematic structural diagram of another base station according to an embodiment of the present invention;
FIG. 6b is a schematic structural diagram of another base station according to an embodiment of the present invention;
FIG. 7a is a schematic structural diagram of a terminal according to an embodiment of the present invention;
FIG. 7b is a schematic structural diagram of another terminal according to an embodiment of the present invention;
FIG. 8a is a schematic structural diagram of another terminal according to an embodiment of the present invention;
FIG. 8b is a schematic structural diagram of another terminal according to an embodiment of the present invention;
FIG. 9 is a schematic flowchart of a data retransmission method according to an embodiment of the present invention;
FIG. 10 is a schematic structural diagram of a system in which a terminal and multiple base stations communicate with each other according to an embodiment of the present invention;
FIG. 11 is a schematic flowchart of another data retransmission method according to an embodiment of the present invention;
FIG. 12 is a schematic flowchart of another data retransmission method according to an embodiment of the present invention; and
FIG. 13 is a schematic flowchart of another data retransmission method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

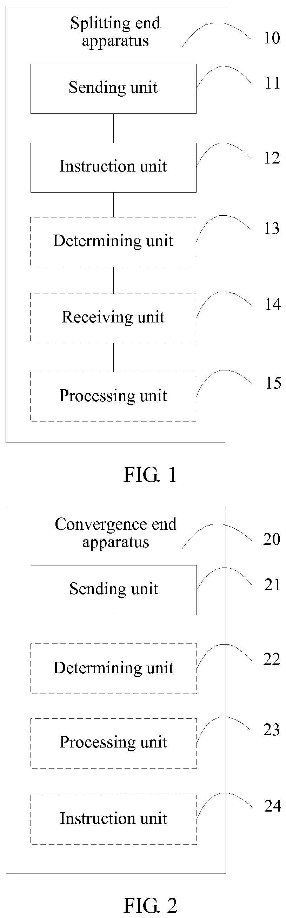

An embodiment of the present invention provides a splitting end apparatus 10. As shown in FIG. 1, the splitting end apparatus 10 includes:
a sending unit 11, configured to send data to a convergence end apparatus by using a first link; and
an instruction unit 12, configured to instruct the first link to stop transmitting, to the convergence end apparatus, a data unit that is not received by the convergence end apparatus, where
the data includes the data unit, and
the sending unit 11 is further configured to retransmit the data unit to the convergence end apparatus by using a second link.

It should be noted that when the splitting end apparatus sends the data to the convergence end apparatus, the splitting end apparatus splits the data by using a PDCP layer of the splitting end apparatus, and the splitting end apparatus sends the split data to the convergence end apparatus by using different links.

Optionally, the splitting end apparatus is a primary base station, and the convergence end apparatus is a terminal.

Specifically, a system in which a terminal communicates with multiple base stations includes one primary base station, at least one secondary base station, and a terminal. When the primary base station and the secondary base station send data on a downlink to the terminal simultaneously or in a time-sharing manner, the primary base station splits the data by using a PDCP layer of the primary base station, and the split data converges at a PDCP layer of the terminal. In this case, the splitting end apparatus is the primary base station, and the convergence end apparatus is the terminal.

In addition, the primary base station sends the split data the split data to the terminal by using different links. The first link may be a link that passes through the secondary base station and on which the secondary base station sends the split data to the terminal, or the first link may be a link on which the primary base station sends the split data to the terminal.

Optionally, the splitting end apparatus is a terminal, and the convergence end apparatus is a primary base station.

Specifically, in a system in which a terminal communicates with multiple base stations, when the terminal sends data on an uplink to the base stations, the data is split by using a PDCP layer of the terminal, and converges at a PDCP layer of a primary base station. In this case, the splitting end apparatus is the terminal, and the convergence end apparatus is the primary base station. The first link may be a link that passes through a secondary base station and on which the secondary base station sends the split data to the primary base station, or the first link may be a link on which the terminal sends the split data to the primary base station.

In addition, if the first link has no retransmission mechanism, in this embodiment of the present invention, the data unit that is not received by the convergence end apparatus is a data unit for which a link needs to be switched to perform transmission. If the first link has a retransmission mechanism, that is, data that is not received by the convergence end apparatus is re-sent on the first link, in this case, the data unit that is described in this embodiment of the present invention and that is not received by the convergence end apparatus does not include a data unit that, as considered by the splitting end apparatus, still needs to be retransmitted by using the first link.

Optionally, the splitting end apparatus further includes a determining unit 13, configured to: determine a sequence number of a to-be-confirmed data unit in the data and a sequence number of a to-be-sent data unit in the splitting end apparatus, and if an interval between the sequence number of the to-be-confirmed data unit and the sequence number of the to-be-sent data unit meets a preset difference condition, determine that a data unit corresponding to the sequence number of the to-be-confirmed data unit is the data unit that is not received by the convergence end apparatus.

It should be noted that, a sending window of the PDCP layer of the splitting end apparatus includes a status variable VTs and a status variable VTa, where VTs denotes a sequence number of a next data unit that is about to be sent, and VTa denotes a sequence number of a next confirmed data unit that is expected to be received.

In a possible implementation manner of this embodiment of the present invention, the splitting end apparatus presets a threshold of a difference between VTs and VTa in the sending window of the PDCP layer of the splitting end apparatus. If the difference between VTs and VTa in the sending window reaches the threshold, the splitting end apparatus determines that a data unit corresponding to VTa is a data unit for which a link needs to be switched to perform transmission. In addition, if the first link passes through an RLC layer of the splitting end apparatus, the splitting end apparatus may also preset a threshold of a difference between VTs and VTa in a sending window of the RLC layer of the splitting end apparatus. If the difference between VTs and VTa in the sending window of the RLC layer reaches the threshold, the splitting end apparatus determines that a data unit corresponding to VTa is a data unit for which a link needs to be switched to perform transmission.

Optionally, the determining unit 13 is further configured to: determine a time during which a sequence number of a to-be-confirmed data unit in the data is not updated, and when the time during which the sequence number of the to-be-confirmed data unit is not updated meets a preset time threshold, determine that a data unit corresponding to the sequence number of the to-be-confirmed data unit is the data unit that is not received by the convergence end apparatus.

Exemplarily, the splitting end apparatus sets a corresponding timer for VTa in the sending window of the PDCP layer of the splitting end apparatus, and the timer sets a time threshold. After VTa is updated, the timer starts or restarts timing. When a time of the timer reaches the time threshold, if VTa is still not updated, the splitting end apparatus determines that a data unit corresponding to VTa is a data unit for which a link needs to be switched to perform transmission. In addition, if the first link passes through the RLC layer of the splitting end apparatus, the sending window may also be a sending window of the RLC layer of the splitting end apparatus.

Optionally, the splitting end apparatus further includes a receiving unit 14, configured to receive a status report sent by the convergence end apparatus, where the status report includes indication information of a sequence number of the data unit that is not received by the convergence end apparatus and that is in the data, and the determining unit 13 is further configured to determine, according to the indication information, the data unit that is not received by the convergence end apparatus.

It should be noted that, the status report may be a PDCP status report, and the data unit is a PDCP data unit, where the PDCP status report may be preferentially sent on an air interface as a special MAC control unit. The PDCP status report may be triggered by the convergence end apparatus or a transmit end of the first link after a radio link of the secondary base station fails. In this case, the splitting end apparatus receives a failure indication message of the radio link of the secondary base station. After receiving the failure indication message, the splitting end apparatus triggers a secondary base station deletion process.

Specifically, the splitting end apparatus may send a PDCP polling request message to the convergence end apparatus, and receive a PDCP status report that is sent by the convergence end apparatus according to the PDCP polling request message. The splitting end apparatus may also receive the PDCP status report triggered by the convergence end apparatus.

A receiving window of the PDCP layer of the convergence end apparatus includes a status variable VRr and a status variable VRh, where VRr denotes a sequence number of a next data unit that is expected to be received, and VRh denotes a next sequence number of a maximum sequence number in the received data unit.

When a difference between VRr and VRh in the receiving window meets a preset threshold of the difference, the convergence end apparatus may determine that a data unit corresponding to VRr is a data unit for which a link needs to be switched to perform transmission. When a time during which VRr is not updated meets the preset time threshold, the convergence end apparatus may also determine that a data unit corresponding to VRr is a data unit for which a link needs to be switched to perform transmission. The convergence end apparatus sends, to the splitting end apparatus by using the PDCP status report, a sequence number of a data unit for which a link needs to be switched to perform transmission.

Further, after the data unit, for which a link needs to be switched to perform transmission, in the data transmitted on the first link is determined, the first link is instructed to stop transmitting the data unit.

Optionally, the sending unit 11 is further configured to send a link switching message to an RLC layer of the first link, where the link switching message includes indication information of a maximum sequence number of all sequence numbers of data units, so that the RLC layer stops, according to the indication information of the maximum sequence number, transmitting a data unit corresponding to the maximum sequence number and a data unit whose sequence number is less than the maximum sequence number.

Exemplarily, if the first link is a link on which the splitting end apparatus directly sends the data to the terminal, after the splitting end apparatus determines the data unit, for which a link needs to be switched to perform transmission, in the data transmitted on the first link, the splitting end apparatus stops transmitting a PDCP data unit corresponding to the maximum sequence number and a PDCP data unit whose sequence number is less than the maximum sequence number. If the PDCP layer has submitted the data unit to the RLC layer, a link switching message is sent to the RLC layer, where the link switching message includes a maximum sequence number of all sequence numbers of data units, so that the RLC layer stops, according to the link switching message, transmitting an RLC protocol data unit corresponding to the maximum sequence number and an RLC protocol data unit whose sequence number is less than the maximum sequence number.

Optionally, the splitting end apparatus further includes a processing unit 15. If a non-confirmation mode is used in the RLC layer of the first link, the processing unit 15 is configured to adjust a status variable in a sending window of the RLC layer of the first link.

The status variable in the sending window includes a sequence number of a next to-be-sent data unit in the data.

Exemplarily, before the splitting end apparatus instructs the first link to stop transmitting the data unit, VTs in the sending window of the RLC layer is 5. If a maximum sequence number of all sequence numbers of data units, for which a link needs to be switched to perform transmission, on the first link is 5, after the splitting end apparatus instructs the first link to stop transmitting the data unit, because the RLC layer stops transmitting all the data units whose sequence numbers are less than or equal to 5, the next to-be-sent data unit of the RLC layer is a data unit whose sequence number is greater than 5, for example, a data unit whose sequence number is 8, so that the splitting end apparatus instructs the RLC layer to update VTs in the sending window from 5 to 8.

Optionally, the processing unit 15 is further configured to adjust the status variable in the sending window of the RLC layer of the first link if a confirmation mode is used in the RLC layer of the first link, and the instruction unit 12 is further configured to instruct the first link to adjust a status variable in a receiving window of the RLC layer of the first link.

The status variable in the sending window includes a sequence number of a next to-be-confirmed data unit in the data and a sequence number of a next to-be-sent data unit in the data.

It should be noted that the RLC layer of the first link includes the transmit end and a receive end, and when the RLC layer is in a confirmation mode, after the transmit end of the RLC layer sends the data to the receive end, the receive end may be required to feed back whether the data is correctly received. Therefore, the sequence number of the next to-be-confirmed data unit in the sending window of the RLC layer corresponds to a sequence number of a next data unit that is in the receiving window of the RLC layer and that is expected to be received, and after adjusting the sending window of the RLC layer, the splitting end apparatus sends an RLC control message to the receive end, to instruct the receive end to correspondingly adjust the receiving window of the RLC layer according to the RLC control message, so that the splitting end apparatus continues to send, to the convergence end apparatus by using the first link, the data except the data unit for which a link needs to be switched to perform transmission.

Optionally, the receiving unit 14 is further configured to receive a first link failure message, and the processing unit 15 is further configured to initiate a first link deletion process according to the first link failure message.

The first link failure message includes a first link failure message sent by the convergence end apparatus or a first link failure message sent by a sending apparatus corresponding to the first link.

Exemplarily, after receiving the first link failure message fed back by the first link, the splitting end apparatus stops sending the data to the convergence end apparatus by using the first link, and switches a link for the data unit that is in the data and that is not sent to the convergence end apparatus to retransmit the data unit to the convergence end apparatus. If the first link does not pass through the secondary base station, the first link failure message is sent by the convergence end apparatus. If the first link passes through the secondary base station, the first link failure message may be sent by the convergence end apparatus, or may be sent by the secondary base station.

By means of the foregoing splitting end apparatus, the splitting end apparatus sends data to a convergence end apparatus by using a first link, and when it is determined that a data unit that is not received by the convergence end apparatus exists in the data, the splitting end apparatus instructs the first link to stop transmitting, to the convergence end apparatus, the data unit that is not received by the convergence end apparatus, and retransmits the data unit to the convergence end apparatus by using a second link. In this way, when a problem occurs in data transmission on the first link, the splitting end apparatus may perform switching for the data unit that is on the first link and that is not sent to the convergence end apparatus, so that the data unit is transmitted by using the second link having a higher transmission rate, thereby improving efficiency of data retransmission and reducing a retransmission delay.

An embodiment of the present invention provides a convergence end apparatus 20. As shown in FIG. 2, the convergence end apparatus 20 includes:
a sending unit 21, configured to send, to a splitting end apparatus, a status report indicating a data unit that is not received by the convergence end apparatus, so that the splitting end apparatus instructs, according to the status report, a first link to stop transmitting the data unit to the convergence end apparatus, and retransmits the data unit to the convergence end apparatus by using a second link.

The status report includes indication information of a sequence number of the data unit, and the data sent by the splitting end apparatus to the convergence end apparatus by using the first link includes the data unit.

Specifically, the splitting end apparatus sends the data to the convergence end apparatus by using the first link, the splitting end apparatus splits the data by using a PDCP layer of the splitting end apparatus, and the splitting end apparatus sends the split data to the convergence end apparatus by using different links.

Optionally, the splitting end apparatus is a primary base station, and the convergence end apparatus is a terminal.

Specifically, a system in which a terminal communicates with multiple base stations includes one primary base station, at least one secondary base station, and a terminal. When the primary base station and the secondary base station send the data on a downlink to the terminal simultaneously or in a time-sharing manner, the primary base station splits the data by using a PDCP layer of the primary base station, and the split data converges at a PDCP layer of the terminal. In this case, the splitting end apparatus is the primary base station, and the convergence end apparatus is the terminal.

In addition, the primary base station sends the split data the split data to the terminal by using different links. The first link may be a link that passes through the secondary base station and on which the secondary base station sends the split data to the terminal, or the first link may be a link on which the primary base station sends the split data to the terminal.

Optionally, the splitting end apparatus is a terminal, and the convergence end apparatus is a primary base station.

Specifically, in a system in which a terminal communicates with multiple base stations, when the terminal sends data on an uplink to the base stations, the data is split by using a PDCP layer of the terminal, and converges at a PDCP layer of a primary base station. In this case, the splitting end apparatus is the terminal, and the convergence end apparatus is the primary base station. The first link may be a link that passes through a secondary base station and on which the secondary base station sends the split data to the primary base station, or the first link may be a link on which the terminal sends the split data to the primary base station.

Further, before sending the status report to the splitting end apparatus, the convergence end apparatus determines the data unit that is not received by the convergence end apparatus.

It should be noted that if the first link has no retransmission mechanism, in this embodiment of the present invention, the determined data unit that is not received by the convergence end apparatus and that is in the data is a data unit for which a link needs to be switched to perform transmission. If the first link has a retransmission mechanism, that is, data that is not received by the convergence end apparatus is re-sent on the first link, in this case, in this embodiment of the present invention, the determined data unit that is not received by the convergence end apparatus and that is in the data does not include a data unit that still needs to be retransmitted by using the first link, as considered by the convergence end apparatus.

Optionally, the convergence end apparatus further includes a determining unit 22, configured to: determine a sequence number of a to-be-received data unit in the data and a maximum sequence number of a data unit already received by the convergence end apparatus; and if an interval between the sequence number of the to-be-received data unit and the maximum sequence number of the already received data unit meets a preset difference condition, determine that a data unit corresponding to the sequence number of the to-be-received data unit is the data unit that is not received by the convergence end apparatus.

The data unit is a PDCP data unit, and the status report sent by the convergence end apparatus to the splitting end apparatus is a PDCP status report.

In a possible implementation manner of this embodiment of the present invention, the convergence end apparatus presets a threshold of a difference between VRh and VRr in a receiving window of the PDCP layer of the convergence end apparatus. If the difference between VRh and VRr in the receiving window reaches the threshold, the convergence end apparatus determines that a data unit corresponding to VRr is a data unit for which a link needs to be switched to perform transmission.

In another possible implementation manner of this embodiment of the present invention, if the first link passes through an RLC layer of the convergence end apparatus, the convergence end apparatus may also preset a threshold of a difference between VRh and VRr in a sending window corresponding to the RLC layer of the convergence end apparatus. If the difference between VRh and VRr in the sending window of the RLC layer reaches the threshold, the RLC layer indicates to the PDCP layer of the convergence end apparatus that a data unit corresponding to VRr is a data unit for which a link needs to be switched to perform transmission, so as to trigger the PDCP to generate a PDCP status report.

Optionally, the determining unit 22 is configured to: determine a time during which a sequence number of a to-be-received data unit in the data is not updated, and when the time during which the sequence number of the to-be-received data unit is not updated meets a preset time threshold, determine that a data unit corresponding to the sequence number of the to-be-received data unit is the data unit that is not received by the convergence end apparatus.

Exemplarily, the convergence end apparatus sets a corresponding timer for VRr in the receiving window of the DPCP layer of the convergence end apparatus, and the timer sets a time threshold. After VRr is updated, the timer starts or restarts timing. When a time of the timer reaches the time threshold, if VRr is still not updated, the convergence end apparatus determines that a data unit corresponding to VRr is a data unit for which a link needs to be switched to perform transmission. In addition, if the first link passes through the RLC layer of the convergence end apparatus, the receiving window may also be a receiving window corresponding to an RLC layer of the first link in the convergence end apparatus, and the RLC layer indicates to the PDCP layer of the convergence end apparatus that a data unit corresponding to VRr is a data unit for which a link needs to be switched to perform transmission, so as to trigger the PDCP to generate a PDCP status report.

Optionally, the sending unit 21 is further configured to send a first link failure message to the splitting end apparatus, so that the splitting end apparatus initiates a first link deletion process according to the status report and the first link failure message.

Exemplarily, after receiving the first link failure message fed back by the first link, the splitting end apparatus stops sending the data to the convergence end apparatus by using the first link, and switches a link for the data unit that is in the data and that is not sent to the convergence end apparatus to retransmit the data unit to the convergence end apparatus.

Optionally, the convergence end apparatus further includes a processing unit 23, configured to: after the data unit that is not received by the convergence end apparatus is determined, adjust a status variable in the receiving window of the RLC layer of the first link.

The status variable in the receiving window includes a sequence number of a next to-be-received data unit in the data and the maximum sequence number of the already received data unit in the data.

It should be noted that the RLC layer of the first link includes a transmit end and a receive end. When the RLC layer is in a confirmation mode, after the transmit end of the RLC layer sends the data to the receive end, the receive end may be required to feed back whether the data is correctly received. Therefore, a sequence number of a next to-be-confirmed data unit in the sending window of the RLC layer corresponds to a sequence number of a next data unit that is in the receiving window of the RLC layer and that is expected to be received.

In a possible implementation manner of this embodiment of the present invention, after the convergence end apparatus sends the PDCP status report to the splitting end apparatus, the splitting end apparatus sends an RLC control message to the RLC layer of the first link, so that the RLC layer adjusts a status variable in the sending window of the RLC layer according to the RLC control message.

Optionally, the convergence end apparatus further includes an instruction unit 24, configured to: after the status variable in the receiving window of the RLC layer of the first link is adjusted, instruct the first link to adjust the status variable in the sending window of the RLC layer of the first link. That is, the convergence end apparatus sends an RLC control message after adjusting the status variable in the receiving window of the RLC layer of the first link, so that the RLC layer adjusts the status variable in the sending window of the RLC layer according to the RLC control message.

By means of the foregoing convergence end apparatus, a splitting end apparatus sends data to the convergence end apparatus by using a first link, and the convergence end apparatus sends, to the splitting end apparatus, a status report indicating a data unit that is not received by the convergence end apparatus, so that the splitting end apparatus instructs, according to the status report, the first link to stop transmitting the data unit to the convergence end apparatus, and retransmits the data unit to the convergence end apparatus by using a second link. In this way, when a problem occurs in data transmission on the first link, the convergence end apparatus may instruct the splitting end apparatus to perform switching for the data unit that is on the first link and that is not sent to the convergence end apparatus, so that the data unit is transmitted by using the second link having a higher transmission rate, thereby improving efficiency of data retransmission and reducing a retransmission delay.

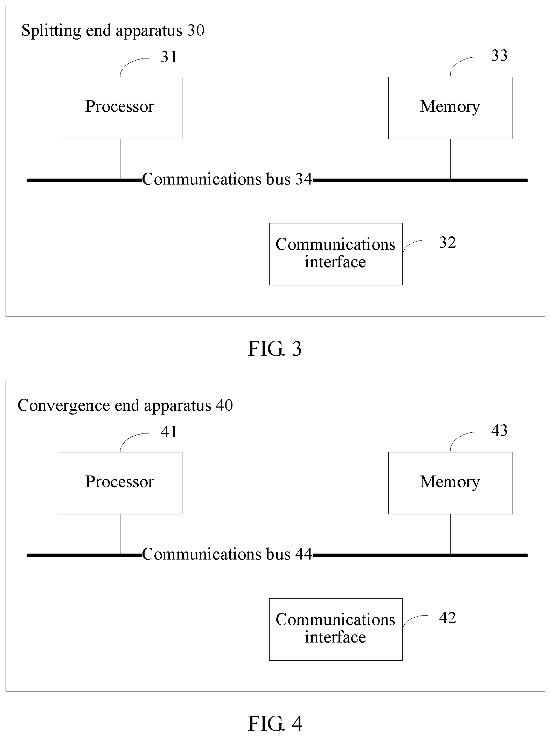

An embodiment of the present invention provides a splitting end apparatus 30. As shown in FIG. 3, the splitting end apparatus 30 includes:
a processor (processor) 31, a communications interface (Communications Interface) 32, a memory (memory) 33, and a communications bus 34, where the processor 31, the communications interface 32, and the memory 33 communicate with each other by using the communications bus 34.

The processor 31 may be a multi-core central processing unit CPU or an application-specific integrated circuit ASIC (Application Specific Integrated Circuit), or is configured as one or more integrated circuits that implement this embodiment of the present invention.

The memory 33 is configured to store program code, where the program code includes a computer operation instruction and a network flow diagram. The memory 33 may include a high-speed RAM memory, and may further include a non-volatile memory (non-volatile memory), for example, at least one magnetic disk storage. The memory 33 may also be a memory array. The memory 33 may be further partitioned into blocks, and the blocks may be combined into a virtual volume according to a particular rule.

The communications interface 32 is configured to implement connection and communication between these apparatuses.

The processor 31 is configured to execute the program code in the memory 33, to implement the following operations:
sending data to a convergence end apparatus by using a first link;
instructing the first link to stop transmitting, to the convergence end apparatus, a data unit that is not received by the convergence end apparatus, where the data includes the data unit; and
retransmitting the data unit to the convergence end apparatus by using a second link.

Optionally, the operations further include: determining a sequence number of a to-be-confirmed data unit in the data and a sequence number of a to-be-sent data unit in the splitting end apparatus; and
if an interval between the sequence number of the to-be-sent data unit and the sequence number of the to-be-confirmed data unit meets a preset difference condition, determining that a data unit corresponding to the sequence number of the to-be-confirmed data unit is the data unit that is not received by the convergence end apparatus.

Optionally, the operations further include: determining a time during which a sequence number of a to-be-confirmed data unit in the data is not updated; and
when the time during which the sequence number of the to-be-confirmed data unit is not updated meets a preset time threshold, determining that a data unit corresponding to the sequence number of the to-be-confirmed data unit is the data unit that is not received by the convergence end apparatus.

Optionally, the operations further include: receiving a status report sent by the convergence end apparatus, where the status report includes indication information of a sequence number of the data unit that is not received by the convergence end apparatus and that is in the data; and
determining, according to the indication information, the data unit that is not received by the convergence end apparatus.

Optionally, the instructing the first link to stop transmitting, to the convergence end apparatus, the data unit that is not received by the convergence end apparatus specifically includes:
sending a link switching message to an RLC layer of the first link, where the link switching message includes indication information of a maximum sequence number of all sequence numbers of data units, so that the RLC layer stops, according to the indication information of the maximum sequence number, transmitting a data unit corresponding to the maximum sequence number and a data unit whose sequence number is less than the maximum sequence number.

Optionally, if a confirmation mode is used in the RLC layer of the first link, the operations further include:
adjusting a status variable in a sending window of the RLC layer of the first link, where the status variable in the sending window includes a sequence number of a next to-be-confirmed data unit in the data and a sequence number of a next to-be-sent data unit in the data; and
instructing the first link to adjust a status variable in a receiving window of the RLC layer of the first link.

Optionally, if a non-confirmation mode is used in the RLC layer of the first link, the operations further include:
adjusting a status variable in a sending window of the RLC layer of the first link, where the status variable in the sending window includes a sequence number of a next to-be-sent data unit in the data.

Optionally, the operations further include: receiving a first link failure message; and initiating a first link deletion process according to the first link failure message.

Optionally, the data unit is a PDCP data unit.

Optionally, the splitting end apparatus is a primary base station, and the convergence end apparatus is a terminal.

Specifically, a system in which a terminal communicates with multiple base stations includes one primary base station, at least one secondary base station, and a terminal. When the primary base station and the secondary base station send the data on a downlink to the terminal simultaneously or in a time-sharing manner, the primary base station splits the data by using a PDCP layer of the primary base station, and the split data converges at a PDCP layer of the terminal. In this case, the splitting end apparatus is the primary base station, and the convergence end apparatus is the terminal.

In addition, the primary base station sends the split data the split data to the terminal by using different links. The first link may be a link that passes through the secondary base station and on which the secondary base station sends the split data to the terminal, or the first link may be a link on which the primary base station sends the split data to the terminal.

Optionally, the splitting end apparatus is a terminal, and the convergence end apparatus is a primary base station.

Specifically, in a system in which a terminal communicates with multiple base stations, when the terminal sends data on an uplink to the base stations, the data is split by using a PDCP layer of the terminal, and converges at a PDCP layer of a primary base station. In this case, the splitting end apparatus is the terminal, and the convergence end apparatus is the primary base station. The first link may be a link that passes through a secondary base station and on which the secondary base station sends the split data to the primary base station, or the first link may be a link on which the terminal sends the split data to the primary base station.

By means of the foregoing splitting end apparatus, the splitting end apparatus sends data to a convergence end apparatus by using a first link, and when it is determined that a data unit that is not received by the convergence end apparatus exists in the data, the splitting end apparatus instructs the first link to stop transmitting, to the convergence end apparatus, the data unit that is not received by the convergence end apparatus, and retransmits the data unit to the convergence end apparatus by using a second link. In this way, when a problem occurs in data transmission on the first link, the splitting end apparatus may perform switching for the data unit that is on the first link and that is not sent to the convergence end apparatus, so that the data unit is transmitted by using the second link having a higher transmission rate, thereby improving efficiency of data retransmission and reducing a retransmission delay.

An embodiment of the present invention provides a convergence end apparatus 40. As shown in FIG. 4, the convergence end apparatus 40 includes:
a processor (processor) 41, a communications interface (Communications Interface) 42, a memory (memory) 43, and a communications bus 44, where the processor 41, the communications interface 42, and the memory 43 communicate with each other by using the communications bus 44.

The processor 41 may be a multi-core central processing unit CPU or an application-specific integrated circuit ASIC (Application Specific Integrated Circuit), or is configured as one or more integrated circuits that implement this embodiment of the present invention.

The memory 43 is configured to store program code, where the program code includes a computer operation instruction and a network flow diagram. The memory 43 may include a high-speed RAM memory, and may further include a non-volatile memory (non-volatile memory), for example, at least one magnetic disk storage. The memory 43 may also be a memory array. The memory 43 may be further partitioned into blocks, and the blocks may be combined into a virtual volume according to a particular rule.

The communications interface 42 is configured to implement connection and communication between these apparatuses.

The processor 41 is configured to execute the program code in the memory 43, to implement the following operations:
sending, to a splitting end apparatus, a status report indicating a data unit that is not received by the convergence end apparatus, so that the splitting end apparatus instructs, according to the status report, a first link to stop transmitting the data unit to the convergence end apparatus, and retransmits the data unit to the convergence end apparatus by using a second link.

The status report includes indication information of a sequence number of the data unit, and data sent by the splitting end apparatus to the convergence end apparatus by using the first link includes the data unit.

Optionally, the operations further include: determining a sequence number of a to-be-received data unit in the data and a maximum sequence number of a data unit already received by the convergence end apparatus;
if an interval between the sequence number of the to-be-received data unit and the maximum sequence number of the already received data unit meets a preset difference condition, determining that a data unit corresponding to the sequence number of the to-be-received data unit is the data unit that is not received by the convergence end apparatus.

Optionally, the operations further include: determining a time during which a sequence number of a to-be-received data unit in the data is not updated;
when the time during which the sequence number of the to-be-received data unit is not updated meets a preset time threshold, determining that a data unit corresponding to the sequence number of the to-be-received data unit is the data unit that is not received by the convergence end apparatus.

Optionally, the operations further include: adjusting a status variable in a receiving window of an RLC layer of the first link, where the status variable in the receiving window includes a sequence number of a next to-be-received data unit in the data and the maximum sequence number of the already received data unit in the data.

Optionally, the operations further include: sending a first link failure message to the splitting end apparatus, so that the splitting end apparatus initiates a first link deletion process according to the status report and the first link failure message.

Optionally, before the adjusting a status variable in a receiving window of an RLC layer of the first link, the operations further include:
assembling and submitting, by the RLC layer of the first link, a complete RLC service data unit to a PDCP layer of the convergence end apparatus.

Optionally, after the adjusting a status variable in a receiving window of an RLC layer of the first link, the operations further include:
instructing the first link to adjust a status variable in a sending window of the RLC layer of the first link.

Optionally, the data unit includes a PDCP data unit.

Optionally, the splitting end apparatus is a primary base station, and the convergence end apparatus is a terminal.

Specifically, a system in which a terminal communicates with multiple base stations includes one primary base station, at least one secondary base station, and a terminal. When the primary base station and the secondary base station send the data on a downlink to the terminal simultaneously or in a time-sharing manner, the primary base station splits the data by using a PDCP layer of the primary base station, and the split data converges at a PDCP layer of the terminal. In this case, the splitting end apparatus is the primary base station, and the convergence end apparatus is the terminal.

In addition, the primary base station sends the split data the split data to the terminal by using different links. The first link may be a link that passes through the secondary base station and on which the secondary base station sends the split data to the terminal, or the first link may be a link on which the primary base station sends the split data to the terminal.

Optionally, the splitting end apparatus is a terminal, and the convergence end apparatus is a primary base station.

Specifically, in a system in which a terminal communicates with multiple base stations, when the terminal sends data on an uplink to the base stations, the data is split by using a PDCP layer of the terminal, and converges at a PDCP layer of a primary base station. In this case, the splitting end apparatus is the terminal, and the convergence end apparatus is the primary base station. The first link may be a link that passes through a secondary base station and on which the secondary base station sends the split data to the primary base station, or the first link may be a link on which the terminal sends the split data to the primary base station.

By means of the foregoing convergence end apparatus, a splitting end apparatus sends data to the convergence end apparatus by using a first link, and the convergence end apparatus sends, to the splitting end apparatus, a status report indicating a data unit that is not received by the convergence end apparatus, so that the splitting end apparatus instructs, according to the status report, the first link to stop transmitting the data unit to the convergence end apparatus, and retransmits the data unit to the convergence end apparatus by using a second link. In this way, when a problem occurs in data transmission on the first link, the convergence end apparatus may instruct the splitting end apparatus to perform switching for the data unit that is on the first link and that is not sent to the convergence end apparatus, so that the data unit is transmitted by using the second link having a higher transmission rate, thereby improving efficiency of data retransmission and reducing a retransmission delay.

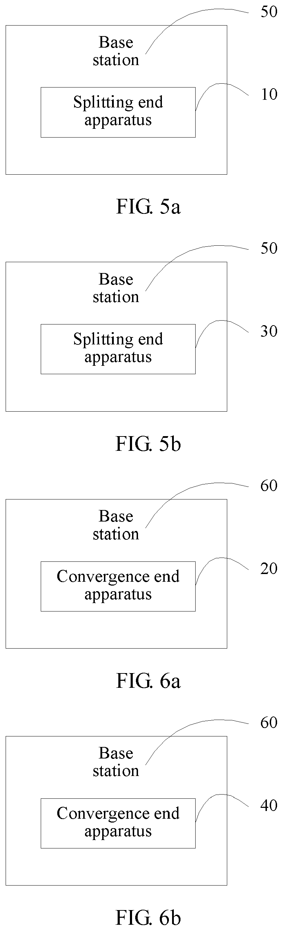

An embodiment of the present invention provides a base station 50. As shown in FIG. 5a or FIG. 5b, the base station 50 includes the splitting end apparatus 10 shown in the foregoing FIG. 1 (as shown in FIG. 5a) or the splitting end apparatus 30 shown in FIG. 3 (as shown in FIG. 5b). For specific description of the splitting end apparatus, reference may be made to the corresponding description in the embodiment shown in the foregoing FIG. 1 or FIG. 3.

By means of the foregoing base station, the base station sends data to a convergence end apparatus by using a first link, and when it is determined that a data unit that is not received by the convergence end apparatus exists in the data, the base station instructs the first link to stop transmitting, to the convergence end apparatus, the data unit that is not received by the convergence end apparatus, and retransmits the data unit to the convergence end apparatus by using a second link. In this way, when a problem occurs in data transmission on the first link, the base station may perform switching for the data unit that is on the first link and that is not sent to the convergence end apparatus, so that the data unit is transmitted by using the second link having a higher transmission rate, thereby improving efficiency of data retransmission and reducing a retransmission delay.

An embodiment of the present invention provides a base station 60. As shown in FIG. 6a or FIG. 6b, the base station 60 includes the convergence end apparatus 20 shown in the foregoing FIG. 2 (as shown in FIG. 6a) or the convergence end apparatus 40 shown in FIG. 4 (as shown in FIG. 6b). For specific description of the convergence end apparatus, reference may be made to the corresponding description in the embodiment shown in the foregoing FIG. 2 or FIG. 4.

By means of the foregoing base station, a splitting end apparatus sends data to the base station by using a first link, and the base station sends, to the splitting end apparatus, a status report indicating a data unit that is not received by the base station, so that the splitting end apparatus instructs, according to the status report, the first link to stop transmitting the data unit to the base station, and retransmits the data unit to the base station by using a second link. In this way, when a problem occurs in data transmission on the first link, the base station may instruct the splitting end apparatus to perform switching for the data unit that is on the first link and that is not sent to the base station, so that the data unit is transmitted by using the second link having a higher transmission rate, thereby improving efficiency of data retransmission and reducing a retransmission delay.

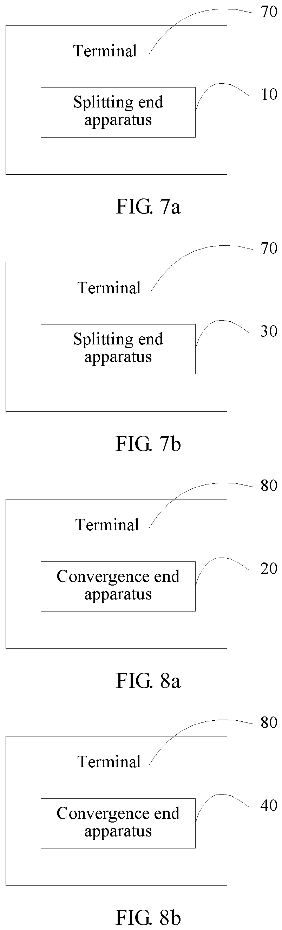

An embodiment of the present invention provides a terminal 70. As shown in FIG. 7a or FIG. 7b, the terminal 70 includes the splitting end apparatus 10 shown in the foregoing FIG. 1 (as shown in FIG. 7a) or the splitting end apparatus 30 shown in FIG. 3 (as shown in FIG. 7b). For specific description of the splitting end apparatus, reference may be made to the corresponding description in the embodiment shown in the foregoing FIG. 1 or FIG. 3.

By means of the foregoing terminal, the terminal sends data to a convergence end apparatus by using a first link, and when it is determined that a data unit that is not received by the convergence end apparatus exists in the data, the terminal instructs the first link to stop transmitting, to the convergence end apparatus, the data unit that is not received by the convergence end apparatus, and retransmits the data unit to the convergence end apparatus by using a second link. In this way, when a problem occurs in data transmission on the first link, the terminal may perform switching for the data unit that is on the first link and that is not sent to the convergence end apparatus, so that the data unit is transmitted by using the second link having a higher transmission rate, thereby improving efficiency of data retransmission and reducing a retransmission delay.

An embodiment of the present invention provides a terminal 80. As shown in FIG. 8a or FIG. 8b, the terminal 80 includes the convergence end apparatus 20 shown in the foregoing FIG. 2 (as shown in FIG. 8a) or the convergence end apparatus 40 shown in FIG. 4 (as shown in FIG. 8b). For specific description of the convergence end apparatus, reference may be made to the corresponding description in the embodiment shown in the foregoing FIG. 2 or FIG. 4.

By means of the foregoing terminal, a splitting end apparatus sends data to the terminal by using a first link, and the terminal sends, to the splitting end apparatus, a status report indicating a data unit that is not received by the terminal, so that the splitting end apparatus instructs, according to the status report, the first link to stop transmitting the data unit to the terminal, and retransmits the data unit to the terminal by using a second link. In this way, when a problem occurs in data transmission on the first link, the terminal may instruct the splitting end apparatus to perform switching for the data unit that is on the first link and that is not sent to the terminal, so that the data unit is transmitted by using the second link having a higher transmission rate, thereby improving efficiency of data retransmission and reducing a retransmission delay.

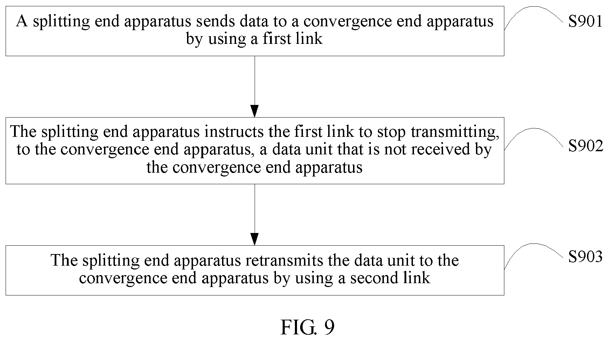

An embodiment of the present invention provides a data retransmission method. The method is applied to a system in which a terminal communicates with multiple base stations. As shown in FIG. 9, the method includes:

S901: A splitting end apparatus sends data to a convergence end apparatus by using a first link.

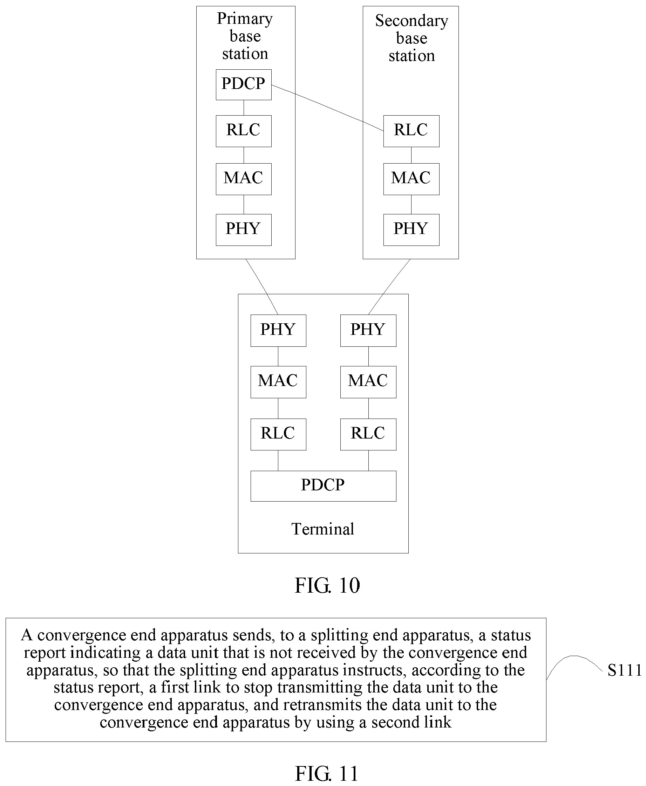

It should be noted that, as shown in FIG. 10, a system in which a terminal communicates with multiple base stations includes at least one secondary base station, a primary base station, and a terminal, and a connection relationship is shown in FIG. 10. The primary base station includes a PDCP layer, an RLC layer, a MAC (Media Access Control, Media Access Control) layer, and a PHY (Physical Layer Device, physical layer); the secondary base station includes an RLC layer, a MAC layer, and a PHY layer; and the terminal includes an RLC layer, a MAC layer, and a PHY layer of a link that correspond to the primary base station, an RLC layer, a MAC layer, and a PHY layer of a link that correspond to the secondary base station, and a PDCP layer.

Optionally, the splitting end apparatus is a primary base station, and the convergence end apparatus is a terminal.

Specifically, when the primary base station and the secondary base station send the data on a downlink to the terminal simultaneously or in a time-sharing manner, the primary base station splits the data by using a PDCP layer of the primary base station, and the split data converges at a PDCP layer of the terminal. In this case, the splitting end apparatus is the primary base station, and the convergence end apparatus is the terminal.

In addition, the primary base station sends the split data the split data to the terminal by using different links. The first link may be a link that passes through the secondary base station and on which the secondary base station sends the split data to the terminal, or the first link may be a link on which the primary base station sends the split data to the terminal.

Optionally, the splitting end apparatus is a terminal, and the convergence end apparatus is a primary base station.

Specifically, in a system in which a terminal communicates with multiple base stations, when the terminal sends data on an uplink to the base stations, the data is split by using a PDCP layer of the terminal, and converges at a PDCP layer of a primary base station. In this case, the splitting end apparatus is the terminal, and the convergence end apparatus is the primary base station. The first link may be a link that passes through a secondary base station and on which the secondary base station sends the split data to the primary base station, or the first link may be a link on which the terminal sends the split data to the primary base station.

S902: The splitting end apparatus instructs the first link to stop transmitting, to the convergence end apparatus, a data unit that is not received by the convergence end apparatus.

The data includes the data unit.

Specifically, before instructing the first link to stop transmitting, to the convergence end apparatus, the data unit that is not received by the convergence end apparatus, the splitting end apparatus determines the data unit that is not received by the convergence end apparatus.

It should be noted that if the first link has no retransmission mechanism, the data unit that is not received by the convergence end apparatus is a data unit for which a link needs to be switched to perform transmission. If the first link has a retransmission mechanism, that is, the data unit that is not received by the convergence end apparatus is re-sent on the first link, in this case, the data unit that is not received by the convergence end apparatus is a data unit for which a link needs to be switched to perform transmission, that is, the data unit does not include a data unit that, as considered by the splitting end apparatus, still needs to be retransmitted by using the first link.

Specifically, this embodiment of the present invention includes the following three implementation manners:

Manner 1: The splitting end apparatus determines a sequence number of a to-be-confirmed data unit in the data and a sequence number of a to-be-sent data unit in the splitting end apparatus, and when an interval between the sequence number of the to-be-sent data unit and the sequence number of the to-be-confirmed data unit meets a preset difference condition, determines that a data unit corresponding to the sequence number of the to-be-confirmed data unit is the data unit that is not received by the convergence end apparatus and that is in the data.

It should be noted that a sending window of the PDCP layer of the splitting end apparatus includes a status variable VTs and a status variable VTa, where VTs denotes a sequence number of a next data unit that is about to be sent, and VTa denotes a sequence number of a next confirmed data unit that is expected to be received.

In a possible implementation manner of this embodiment of the present invention, the splitting end apparatus is a primary base station, the convergence end apparatus is a terminal, and the primary base station presets a threshold of a difference between VTs and VTa in a sending window of a PDCP layer of the primary base station. If the difference between VTs and VTa in the sending window of the PDCP layer reaches the threshold, the primary base station determines that a data unit corresponding to VTa is a data unit for which a link needs to be switched to perform transmission.

In addition, if the first link passes through an RLC layer of the primary base station, the primary base station may also preset a threshold of a difference between VTs and VTa in a sending window of the RLC layer of the primary base station. If the difference between VTs and VTa in the sending window of the RLC layer reaches the threshold, the primary base station determines that a data unit corresponding to VTa is a data unit for which a link needs to be switched to perform transmission. If the first link is a link that passes through a secondary base station, the secondary base station may determine, by using a status variable in a sending window of an RLC layer of the secondary base station and RLC protocol data unit generation information, a data unit for which a link needs to be switched to perform transmission, and notify the primary base station when switching occurs or a radio link of the secondary base station fails, or during RLC re-establishment.

In another possible implementation manner of this embodiment of the present invention, the splitting end apparatus is a terminal, the convergence end apparatus is a primary base station, and the terminal presets a threshold of a difference between VTs and VTa in a sending window of a PDCP layer of the terminal. If the difference between VTs and VTa in the sending window of the PDCP layer reaches the threshold, the terminal determines that a data unit corresponding to VTa is a data unit for which a link needs to be switched to perform transmission.

In addition, the terminal may further preset a threshold of a difference between VTs and VTa in a sending window corresponding to an RLC layer of the first link in the terminal. If the difference between VTs and VTa in the sending window of the RLC layer reaches the threshold, the terminal determines that a data unit corresponding to VTa is a data unit for which a link needs to be switched to perform transmission.

Manner 2: The splitting end apparatus determines a time during which a sequence number of a to-be-confirmed data unit in the data is not updated, and when the time during which the sequence number of the to-be-confirmed data unit is not updated meets a preset time threshold, determines that a data unit corresponding to the sequence number of the to-be-confirmed data unit is the data unit that is not received by the convergence end apparatus and that is in the data.

Exemplarily, the splitting end apparatus sets a corresponding timer for VTa in a sending window, and the timer sets a time threshold. After VTa is updated, the timer starts or restarts timing. When a time of the timer reaches the time threshold, if VTa is still not updated, the splitting end apparatus determines that a data unit corresponding to VTa is a data unit for which a link needs to be switched to perform transmission. If the splitting end apparatus is a primary base station, and the convergence end apparatus is a terminal, the sending window may be a sending window of the PDCP layer of the primary base station. If the splitting end apparatus is a primary base station, the convergence end apparatus is a terminal, and the first link passes through an RLC layer of the primary base station, the sending window may be a sending window of the RLC layer of the primary base station. If the splitting end apparatus is a terminal, and the convergence end apparatus is a primary base station, the sending window may be a sending window corresponding to the PDCP layer of the terminal or a sending window corresponding to an RLC layer of the first link in the terminal.

Manner 3: The splitting end apparatus receives a status report sent by the convergence end apparatus, where the status report includes the sequence number of the data unit that is not received by the convergence end apparatus and that is in the data, and the splitting end apparatus determines, according to the sequence number, the data unit that is not received by the convergence end apparatus and that is in the data.

Optionally, the data unit is a PDCP data unit, and the status report is a PDCP status report.

Specifically, the splitting end apparatus may send a PDCP polling request message to the convergence end apparatus, and receive a PDCP status report that is sent by the convergence end apparatus according to the PDCP polling request message. The splitting end apparatus may also receive the PDCP status report triggered by the convergence end apparatus.

It should be noted that, a receiving window of the PDCP layer of the convergence end apparatus includes a status variable VRr and a status variable VRh, where VRr denotes a sequence number of a next data unit that is expected to be received, and VRh denotes a next sequence number of a maximum sequence number in the received data unit.

When a difference between VRr and VRh in the receiving window meets a preset threshold of the difference, the convergence end apparatus may determine that a data unit corresponding to VRr is a data unit for which a link needs to be switched to perform transmission. When a time during which VRr is not updated meets a preset time threshold, the convergence end apparatus may also determine that a data unit corresponding to VRr is a data unit for which a link needs to be switched to perform transmission. If the splitting end apparatus is a primary base station, and the convergence end apparatus is a terminal, the receiving window may be a receiving window corresponding to an RLC layer of the first link in the terminal or a receiving window of the PDCP layer of the terminal. If the splitting end apparatus is a terminal, and the convergence end apparatus is a primary base station, the receiving window may be a receiving window of the PDCP layer of the primary base station or a receiving window of an RLC layer through which the first link passes.

In Manner 1 and Manner 2, the data unit that is not received by the convergence end apparatus is determined by the splitting end apparatus. In Manner 3, after the convergence end apparatus determines the data unit that is not received, the splitting end apparatus receives the PDCP status report sent by the convergence end apparatus, and determines, by using the PDCP status report, the data unit that is not received by the convergence end apparatus.

Further, after the splitting end instructs the first link to stop transmitting the data unit to the convergence end apparatus, a link switching message is sent to the RLC layer of the first link, where the link switching message includes indication information of a maximum sequence number of all sequence numbers of data units, so that the RLC layer stops, according to the indication information of the maximum sequence number, transmitting a data unit corresponding to the maximum sequence number and a data unit whose sequence number is less than the maximum sequence number.

Exemplarily, if the first link is a link on which the splitting end apparatus directly sends the data to the terminal, after the splitting end apparatus determines the data unit, for which a link needs to be switched to perform transmission, in the data transmitted on the first link, the splitting end apparatus stops transmitting a PDCP data unit corresponding to the maximum sequence number and a PDCP data unit whose sequence number is less than the maximum sequence number. If the PDCP layer has submitted the data unit to the RLC layer, a link switching message is sent to the RLC layer, where the link switching message includes a maximum sequence number of all sequence numbers of data units, so that the RLC layer stops, according to the link switching message, transmitting an RLC protocol data unit corresponding to the maximum sequence number and an RLC protocol data unit whose sequence number is less than the maximum sequence number. If the first link is a link on which the primary base station sends the data to the terminal by using the secondary base station, after the primary base station determines the data unit, for which a link needs to be switched to perform transmission, on the first link, the link switching message is sent to the secondary base station, to instruct an RLC layer of the secondary base station to stop transmitting an RLC protocol data unit corresponding to a sequence number less than the maximum sequence number.

Optionally, before instructing the first link to stop transmitting the data unit, the splitting end apparatus receives a first link failure message, and initiates a first link deletion process according to the first link failure message.

The first link failure message includes a first link failure message sent by the convergence end apparatus or a first link failure message sent by a sending apparatus corresponding to the first link.

Exemplarily, after receiving the first link failure message fed back by the first link, the splitting end apparatus stops sending the data to the convergence end apparatus by using the first link, and switches a link for the data unit that is in the data and that is not sent to the convergence end apparatus to retransmit the data unit to the convergence end apparatus.

Optionally, if a non-confirmation mode is used in the RLC layer of the first link, after instructing the first link to stop transmitting the data unit, the splitting end apparatus adjusts a status variable in a sending window of the RLC layer of the first link.

The status variable in the sending window includes a sequence number of a next to-be-sent data unit in the data.

Exemplarily, before the splitting end apparatus instructs the first link to stop transmitting the data unit, VTs in the sending window of the RLC layer is 5. If a maximum sequence number of all sequence numbers of data units, for which a link needs to be switched to perform transmission, on the first link is 5, after the splitting end apparatus instructs the first link to stop transmitting the data unit, because the RLC layer stops transmitting all the data units whose sequence numbers are less than or equal to 5, a next to-be-sent data unit of the RLC layer is a data unit whose sequence number is greater than 5, for example, a data unit whose sequence number is 8, so that the splitting end apparatus instructs the RLC layer to update VTs in the sending window from 5 to 8.

Optionally, if a confirmation mode is used in the RLC layer of the first link, after instructing the first link to stop transmitting the data unit, the splitting end apparatus adjusts a status variable in the sending window of the RLC layer of the first link, and instructs the first link to adjust a status variable in the receiving window of the RLC layer of the first link.

The status variable in the sending window includes a sequence number of a next to-be-confirmed data unit in the data and a sequence number of a next to-be-sent data unit in the data.

It should be noted that, the RLC layer of the first link includes a transmit end and a receive end. As shown in FIG. 10, if the first link is a link that passes through the secondary base station and on which the secondary base station sends the split data to the terminal, the RLC layer of the secondary base station is the transmit end, the RLC layer of the terminal is the receive end, the sending window of the RLC layer is the sending window of the RLC layer of the secondary base station, and the receiving window of the RLC layer is a receiving window of the RLC layer of the terminal. If the RLC layer of the first link is in a confirmation mode, after the transmit end of the RLC layer sends the data to the receive end, the receive end may be required to feed back whether the data is correctly received. Therefore, the sequence number of the next to-be-confirmed data unit in the sending window of the RLC layer corresponds to a sequence number of a next data unit that is in the receiving window of the RLC layer and that is expected to be received, and after adjusting the sending window of the RLC layer, the splitting end apparatus sends an RLC control message to the receive end, to instruct the receive end to correspondingly adjust the receiving window of the RLC layer according to the RLC control message, so that the splitting end apparatus continues to send, to the convergence end apparatus by using the first link, the data except the data unit for which a link needs to be switched to perform transmission.

S903: The splitting end apparatus retransmits the data unit to the convergence end apparatus by using a second link.

Exemplarily, the splitting end apparatus is a terminal, the convergence end apparatus is a primary base station, and the first link passes through a secondary base station. A wireless network signal between the secondary base station and the convergence end apparatus is relatively weak, resulting in that a data unit for which a link needs to be switched to perform transmission exists in the data sent by the secondary base station to the terminal. Therefore, after determining that a data unit for which a link needs to be switched to perform transmission exists in the data, the primary base station instructs the secondary base station to stop transmitting the data unit, and send the data unit to the terminal by using the primary base station. That is, the second link is a link that passes through the primary base station.

In addition, when multiple secondary base stations exist in a system in which a terminal communicates with multiple base stations, and the first link is a link on which the data is sent by using the primary base station, after determining that a data unit for which a link needs to be switched to perform transmission exists in the data, the primary base station determines a secondary base station that has a high transmission rate, and sends the data unit to the terminal by using the secondary base station.

It should be noted that the mechanism disclosed in this embodiment of the present invention is applicable to any scenario in which one path of data is split and allocated to multiple links for transmission and the split data then converges. For example, the mechanism is also applicable to a scenario in which an MPTCP (Multi path Transmission Control Protocol, Multipath Transmission Control Protocol) is used as a splitting/convergence protocol layer, below which mapping to multiple TCP (Transmission Control Protocol, Transmission Control Protocol) or UDP (User Datagram Protocol, User Datagram Protocol) layers is performed. For another example, the mechanism is also applicable to a scenario in which the IP is used as a splitting/convergence protocol layer, below which mapping to multiple LTE (Long Term Evolution, Long Term Evolution technology) PDCP layers or even mapping to LTE PDCP layers and WiFi MAC layers is performed.

By means of the foregoing method, a splitting end apparatus sends data to a convergence end apparatus by using a first link, and when it is determined that a data unit that is not received by the convergence end apparatus exists in the data, the splitting end apparatus instructs the first link to stop transmitting, to the convergence end apparatus, the data unit that is not received by the convergence end apparatus, and retransmits the data unit to the convergence end apparatus by using a second link. In this way, when a problem occurs in data transmission on the first link, the splitting end apparatus may perform switching for the data unit that is on the first link and that is not sent to the convergence end apparatus, so that the data unit is transmitted by using the second link having a higher transmission rate, thereby improving efficiency of data retransmission and reducing a retransmission delay.

An embodiment of the present invention provides another data retransmission method. The method is applied to a system in which a terminal communicates with multiple base stations. As shown in FIG. 11, the method includes:

S111: A convergence end apparatus sends, to a splitting end apparatus, a status report indicating a data unit that is not received by the convergence end apparatus, so that the splitting end apparatus instructs, according to the status report, a first link to stop transmitting the data unit to the convergence end apparatus, and retransmits the data unit to the convergence end apparatus by using a second link.

The status report includes indication information of a sequence number of the data unit, and data sent by the splitting end apparatus to the convergence end apparatus by using the first link includes the data unit.

Specifically, the splitting end apparatus sends the data to the convergence end apparatus by using the first link, the splitting end apparatus splits the data by using a PDCP layer of the splitting end apparatus, and the splitting end apparatus sends the split data to the convergence end apparatus by using different links.

Optionally, the splitting end apparatus is a primary base station, and the convergence end apparatus is a terminal.

Specifically, a system in which a terminal communicates with multiple base stations includes one primary base station, at least one secondary base station, and a terminal. When the primary base station and the secondary base station send the data on a downlink to the terminal simultaneously or in a time-sharing manner, the primary base station splits the data by using a PDCP layer of the primary base station, and the split data converges at a PDCP layer of the terminal. In this case, the splitting end apparatus is the primary base station, and the convergence end apparatus is the terminal.

In addition, the primary base station sends the split data the split data to the terminal by using different links. The first link may be a link that passes through the secondary base station and on which the secondary base station sends the split data to the terminal, or the first link may be a link on which the primary base station sends the split data to the terminal.

Optionally, the splitting end apparatus is a terminal, and the convergence end apparatus is a primary base station.

Specifically, in a system in which a terminal communicates with multiple base stations, when the terminal sends data on an uplink to the base stations, the data is split by using a PDCP layer of the terminal, and converges at a PDCP layer of a primary base station. In this case, the splitting end apparatus is the terminal, and the convergence end apparatus is the primary base station. The first link may be a link that passes through a secondary base station and on which the secondary base station sends the split data to the primary base station, or the first link may be a link on which the terminal sends the split data to the primary base station.

Further, before sending the status report to the splitting end apparatus, the convergence end apparatus determines the data unit that is not received by the convergence end apparatus.

It should be noted that if the first link has no retransmission mechanism, in this embodiment of the present invention, the determined data unit that is not received by the convergence end apparatus and that is in the data is a data unit for which a link needs to be switched to perform transmission. If the first link has a retransmission mechanism, that is, data that is not received by the convergence end apparatus is re-sent on the first link, in this case, in this embodiment of the present invention, the determined data unit that is not received by the convergence end apparatus and that is in the data does not include a data unit that still needs to be retransmitted by using the first link, as considered by the convergence end apparatus.

Optionally, the convergence end apparatus determines a sequence number of a to-be-received data unit in the data and a maximum sequence number of a data unit already received by the convergence end apparatus; and if an interval between the sequence number of the to-be-received data unit and the maximum sequence number of the already received data unit meets a preset difference condition, determines that a data unit corresponding to the sequence number of the to-be-received data unit is the data unit that is not received by the convergence end apparatus.

Optionally, the data unit is a PDCP data unit, and the status report sent by the convergence end apparatus to the splitting end apparatus is a PDCP status report.

In a possible implementation manner of this embodiment of the present invention, the convergence end apparatus presets a threshold of a difference between VRh and VRr in a receiving window of the PDCP layer of the convergence end apparatus. If the difference between VRh and VRr in the receiving window reaches the threshold, the convergence end apparatus determines that a data unit corresponding to VRr is a data unit for which a link needs to be switched to perform transmission.

In another possible implementation manner of this embodiment of the present invention, if the first link passes through an RLC layer of the convergence end apparatus, the convergence end apparatus may also preset a threshold of a difference between VRh and VRr in a sending window corresponding to an RLC layer of the convergence end apparatus. If the difference between VRh and VRr in the sending window of the RLC layer reaches the threshold, the RLC layer indicates to the PDCP layer of the convergence end apparatus that a data unit corresponding to VRr is a data unit for which a link needs to be switched to perform transmission, so as to trigger the PDCP to generate a PDCP status report.

Optionally, the convergence end apparatus determines a time during which a sequence number of a to-be-received data unit in the data is not updated, and when the time during which the sequence number of the to-be-received data unit is not updated meets a preset time threshold, determines that a data unit corresponding to the sequence number of the to-be-received data unit is the data unit that is not received by the convergence end apparatus.

Exemplarily, the convergence end apparatus sets a corresponding timer for VRr in the receiving window of the DPCP layer of the convergence end apparatus, and the timer sets a time threshold. After VRr is updated, the timer starts or restarts timing. When a time of the timer reaches the time threshold, if VRr is still not updated, the convergence end apparatus determines that a data unit corresponding to VRr is a data unit for which a link needs to be switched to perform transmission. In addition, if the first link passes through the RLC layer of the convergence end apparatus, the receiving window may also be a receiving window corresponding to an RLC layer of the first link in the convergence end apparatus, and the RLC layer indicates to the PDCP layer of the convergence end apparatus that a data unit corresponding to VRr is a data unit for which a link needs to be switched to perform transmission, so as to trigger the PDCP to generate a PDCP status report.

Optionally, the convergence end apparatus sends a first link failure message to the splitting end apparatus, so that the splitting end apparatus initiates a first link deletion process according to the status report and the first link failure message.

Exemplarily, after receiving the first link failure message fed back by the first link, the splitting end apparatus stops sending the data to the convergence end apparatus by using the first link, and switches a link for the data unit that is in the data and that is not sent to the convergence end apparatus to retransmit the data unit to the convergence end apparatus.

It should be noted that, the RLC layer of the first link includes a transmit end and a receive end. When the RLC layer is in a confirmation mode, after the transmit end of the RLC layer sends the data to the receive end, the receive end may be required to feed back whether the data is correctly received. Therefore, a sequence number of a next to-be-confirmed data unit in the sending window of the RLC layer corresponds to a sequence number of a next data unit that is in the receiving window of the RLC layer and that is expected to be received.

In a possible implementation manner of this embodiment of the present invention, after determining the data unit that is not received by the convergence end apparatus, the convergence end apparatus adjusts a status variable in the receiving window of the RLC layer of the first link, and after receiving the PDCP report sent by the convergence end, the splitting end apparatus sends an RLC control message to the RLC layer of the first link, so that the RLC layer adjusts a status variable in the sending window of the RLC layer according to the RLC control message.

In another possible implementation manner of this embodiment of the present invention, after adjusting a status variable in the receiving window of the RLC layer of the first link, the convergence end apparatus instructs the first link to adjust a status variable in the sending window of the RLC layer of the first link. That is, the convergence end apparatus sends an RLC control message after adjusting the status variable in the receiving window of the RLC layer of the first link, so that the RLC layer adjusts the status variable in the sending window of the RLC layer according to the RLC control message.

By means of the foregoing method, a splitting end apparatus sends data to a convergence end apparatus by using a first link, and the convergence end apparatus sends, to the splitting end apparatus, a status report indicating a data unit that is not received by the convergence end apparatus, so that the splitting end apparatus instructs, according to the status report, the first link to stop transmitting the data unit to the convergence end apparatus, and retransmits the data unit to the convergence end apparatus by using a second link. In this way, when a problem occurs in data transmission on the first link, the convergence end apparatus may instruct the splitting end apparatus to perform switching for the data unit that is on the first link and that is not sent to the convergence end apparatus, so that the data unit is transmitted by using the second link having a higher transmission rate, thereby improving efficiency of data retransmission and reducing a retransmission delay.

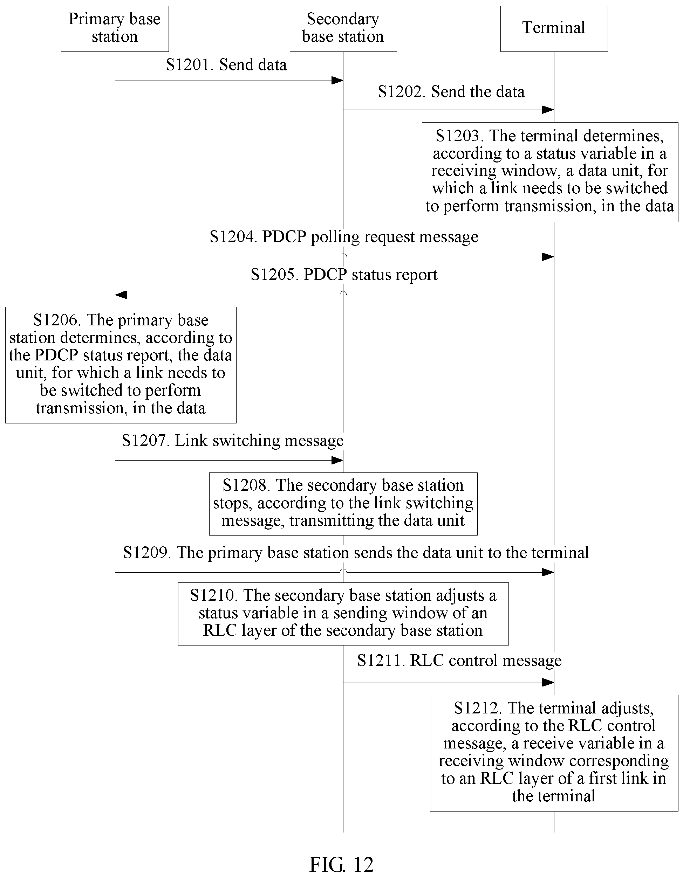

To enable a person skilled in the art to understand more clearly the technical solutions provided in the embodiments of the present invention, another data retransmission method provided in an embodiment of the present invention is described below in detail by using specific embodiments. As shown in FIG. 12, the method is described by using that a primary base station is used as a splitting end apparatus, a terminal is used as a convergence end apparatus, and a first link is a link that passes through a secondary base station. The method includes:
S1201: A primary base station sends data to a secondary base station.
S1202: The secondary base station sends the data to a terminal.
   Specifically, the data sent on a downlink by the base station to the terminal is split by using a PDCP layer of the primary base station, and a link on which the split data is sent to the terminal by using the secondary base station is the first link.
S1203: The terminal determines, according to a status variable in a receiving window, a data unit, for which a link needs to be switched to perform transmission, in the data.
   Specifically, when a difference between VRr and VRh in the receiving window meets a preset threshold of the difference, the terminal may determine that a data unit corresponding to VRr is a data unit for which a link needs to be switched to perform transmission. Alternatively, when a time during which VRr is not updated meets a preset time threshold, the terminal may determine that a data unit corresponding to VRr is a data unit for which a link needs to be switched to perform transmission. The receiving unit may be a receiving window corresponding to an RLC layer of a first link in the terminal, or may be a receiving window of a PDCP layer of the terminal.
S1204: The primary base station sends a PDCP polling request message to the terminal.
S1205: The terminal sends a PDCP status report to the primary base station according to the PDCP polling request message.
S1206: The primary base station determines, according to the PDCP status report, the data unit, for which a link needs to be switched to perform transmission, in the data.

Specifically, the PDCP status report includes a sequence number of the data unit, for which a link needs to be switched to perform transmission, in the data, and the primary base station determines the corresponding data unit by using the sequence number.
S1207: The primary base station sends a link switching message to the secondary base station.

The link switching message includes a maximum sequence number of all sequence numbers of data units for which a link needs to be switched to perform transmission.
S1208: The secondary base station stops, according to the link switching message, transmitting the data unit.

Specifically, after receiving the link switching message, the secondary base station stops transmitting a data unit corresponding to the maximum sequence number and a data unit whose sequence number is less than the maximum sequence number.
S1209: The primary base station sends the data unit to the terminal by using a second link.

Specifically, when the primary base station determines that a data unit for which a link needs to be switched to perform transmission exists in the data sent by the secondary base station, the primary base station retransmits the data unit to the terminal by using the second link.

It should be noted that when the primary base station determines that a data unit for which a link needs to be switched to perform transmission exists in the secondary base station, the primary base station sends the data unit to the terminal by itself. If a data unit for which a link needs to be switched to perform transmission exists in the primary base station, the primary base station may perform switching, so that the secondary base station having a high transmission rate retransmits the data unit to the terminal.
S1210: The secondary base station adjusts a status variable in a sending window of an RLC layer of the secondary base station.

Exemplarily, before the RLC layer of the secondary base station stops transmitting the data unit, VTs in a sending window of the RLC layer is 5. If a maximum sequence number of all sequence numbers of data units, for which a link needs to be switched to perform transmission, on the first link is 5, after the secondary base station stops transmitting the data unit, because the RLC layer stops transmitting all data units whose sequence numbers are less than or equal to 5, a next to-be-sent data unit of the RLC layer is a data unit whose sequence number is greater than 5, for example, a data unit whose sequence number is 8, so that the secondary base station instructs the RLC layer to update VTs in the sending window from 5 to 8.

It should be noted that, if the RLC layer is in a confirmation mode, after a transmit end of the RLC layer sends the data to a receive end, the receive end may be required to feed back whether the data is correctly received. Therefore, a sequence number of a next to-be-confirmed data unit in the sending window of the RLC layer corresponds to a sequence number of a next data unit that is in a receiving window of the RLC layer and that is expected to be received. In this case, step S 1211 to step S1212 below need to be performed.
S 1211: The secondary base station sends an RLC control message to the terminal.
S1212: The terminal adjusts, according to the RLC control message, a receive variable in a receiving window corresponding to an RLC layer of a first link in the terminal, so that the secondary base station continues to normally send, to the terminal, the data except the data unit for which a link needs to be switched to perform transmission.

It should be noted that, in step S1210 to step S1212, the primary base station sends the link switching message to instruct the secondary base station to adjust a sending window of an RLC layer of the secondary base station, and the secondary base station then sends the RLC control message to instruct the terminal to correspondingly adjust the receiving window corresponding to the RLC layer of the first link in the terminal. In another possible implementation manner of this embodiment of the present invention, after determining the data unit, for which a link needs to be switched to perform transmission, in the data, the terminal may instruct the RLC layer of the terminal to adjust the status variable in the receiving window, and send the RLC control message to the secondary base station to instruct the secondary base station to correspondingly adjust the sending window of the RLC layer of the secondary base station.

In this way, when a problem occurs in data transmission by the secondary base station, the primary base station may perform switching for the data unit, for which a link needs to be switched to perform transmission, in the secondary base station, so that the data unit is transmitted by using the second link having a higher transmission rate, thereby improving efficiency of data retransmission and reducing a retransmission delay.

In addition, for brief description, the foregoing method embodiments are all expressed as a combination of a series of actions. However, a person skilled in the art should appreciate that the present invention is not limited to the described order of actions. Next, the person skilled in the art should also appreciate that the embodiments described in the specification are all preferred embodiments, and the involved actions and modules are not necessarily required in the present invention.

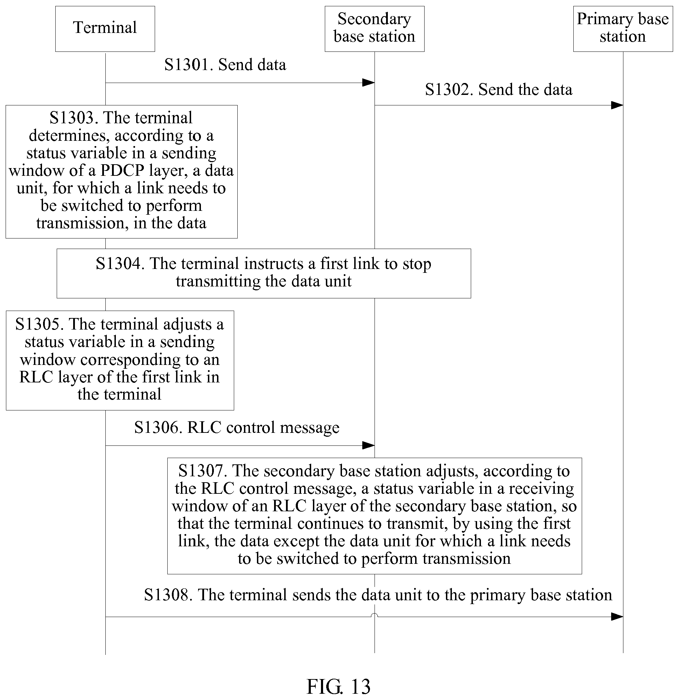

To enable a person skilled in the art to understand more clearly the technical solutions provided in the embodiments of the present invention, another data retransmission method provided in an embodiment of the present invention is described below in detail by using specific embodiments. As shown in FIG. 13, the method is described by using that a terminal is used as a splitting end apparatus, a primary base station is used as a convergence end apparatus, and a first link is a link that passes through a secondary base station. The method includes:
S1301: A terminal sends data to a secondary base station.
S1302: The secondary base station sends the data to a primary base station.
   Specifically, the data sent on an uplink by the terminal to the base station is split by using a PDCP layer of the terminal, and a link on which the split data is sent to the primary base station by using the secondary base station is the first link.
S1303: The terminal determines, according to a status variable in a sending window of a PDCP layer, a data unit, for which a link needs to be switched to perform transmission, in the data.
   Optionally, the terminal presets a threshold of a difference between VTs and VTa in a sending window of a PDCP layer or an RLC layer of the terminal. If the difference between VTs and VTa in the sending window reaches the threshold, the terminal determines that a data unit corresponding to VTa is a data unit for which a link needs to be switched to perform transmission.
   Optionally, the terminal sets a corresponding timer for VTa in the sending window of the PDCP layer or the RLC layer of the terminal, and the timer sets a time threshold. After VTa is updated, the timer starts or restarts timing. When a time of the timer reaches the time threshold, if VTa is still not updated, the terminal determines that a data unit corresponding to VTa is a data unit for which a link needs to be switched to perform transmission.
S1304: The terminal instructs a first link to stop transmitting the data unit.
   After the terminal determines the data unit, for which a link needs to be switched to perform transmission, in the data, the PDCP layer of the terminal stops sending a PDCP data unit to RLC of the first link, and the PDCP layer stops transmitting, by using the first link, a data unit corresponding to a maximum sequence number and a data unit whose sequence number is less than the maximum sequence number. If the PDCP layer has submitted the data unit to the RLC layer, a link switching message is sent to the RLC layer of the terminal, where the link switching message includes a maximum sequence number of all sequence numbers of data units for which a link needs to be switched to perform transmission. Therefore, the RLC layer stops transmitting, by using the first link, an RLC protocol data unit corresponding to the maximum sequence number and an RLC protocol data unit whose sequence number is less than the maximum sequence number.
S1305: The terminal adjusts a status variable in a sending window corresponding to an RLC layer of the first link in the terminal.
S1306: The terminal sends an RLC control message to the secondary base station.
S1307: The secondary base station adjusts, according to the RLC control message, a status variable in a receiving window of an RLC layer of the secondary base station, so that the terminal continues to transmit, by using the first link, the data except the data unit for which a link needs to be switched to perform transmission.
   Specifically, after adjusting the sending window corresponding to the RLC layer of the first link in the terminal, the terminal sends the RLC control message to the secondary base station, to notify the secondary base station of an adjustment condition of the sending window of the RLC layer, so that the secondary base station correspondingly adjusts the receiving window of the RLC layer of the secondary base station.
S1308: The terminal sends, by using a second link to the primary base station, the data unit for which a link needs to be switched to perform transmission.

In addition, for brief description, the foregoing method embodiment is expressed as a combination of a series of actions. However, a person skilled in the art should appreciate that the present invention is not limited to the described order of the actions. Next, the person skilled in the art should also appreciate that the embodiments described in this specification are all preferred embodiments, and the involved actions and modules are not necessarily required in the present invention.

In this way, when a problem occurs in data transmission by the secondary base station, the terminal may perform switching for the data unit, for which a link needs to be switched to perform transmission, in the secondary base station, so that the data unit is transmitted by using the second link having a higher transmission rate, thereby improving efficiency of data retransmission and reducing a retransmission delay.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A splitting end apparatus, comprising:
a sending unit, configured to send data to a convergence end apparatus by using a first link; and
an instruction unit, configured to instruct the first link to stop transmitting, to the convergence end apparatus, a data unit that is not received by the convergence end apparatus, wherein the data comprises the data unit, wherein
the sending unit is further configured to retransmit the data unit to the convergence end apparatus by using a second link.

2. The splitting end apparatus according to claim 1, wherein the splitting end apparatus further comprises a determining unit, configured to: determine a sequence number of a to-be-confirmed data unit in the data and a sequence number of a to-be-sent data unit in the splitting end apparatus; and
if an interval between the sequence number of the to-be-confirmed data unit and the sequence number of the to-be-sent data unit meets a preset difference condition, determine that a data unit corresponding to the sequence number of the to-be-confirmed data unit is the data unit that is not received by the convergence end apparatus.

3. The splitting end apparatus according to claim 1, wherein the splitting end apparatus further comprises a determining unit, configured to: determine a time during which a sequence number of a to-be-confirmed data unit in the data is not updated; and
when the time during which the sequence number of the to-be-confirmed data unit is not updated meets a preset time threshold, determine that a data unit corresponding to the sequence number of the to-be-confirmed data unit is the data unit that is not received by the convergence end apparatus.

4. The splitting end apparatus according to claim 1, wherein the splitting end apparatus further comprises a receiving unit, configured to receive a status report sent by the convergence end apparatus, wherein the status report comprises indication information of a sequence number of the data unit that is not received by the convergence end apparatus and that is in the data; and
the splitting end apparatus further comprises a determining unit, configured to determine, according to the indication information, the data unit that is not received by the convergence end apparatus.

5. The splitting end apparatus according to any one of claims 1 to 4, wherein the sending unit is further configured to send a link switching message to a Radio Link Control RLC layer of the first link, wherein the link switching message comprises indication information of a maximum sequence number of all sequence numbers of data units, so that the RLC layer stops, according to the indication information of the maximum sequence number, transmitting a data unit corresponding to the maximum sequence number and a data unit whose sequence number is less than the maximum sequence number.

6. The splitting end apparatus according to any one of claims 1 to 5, wherein the splitting end apparatus further comprises a processing unit, and if a confirmation mode is used in the RLC layer of the first link, the processing unit is configured to adjust a status variable in a sending window of the RLC layer of the first link, wherein the status variable in the sending window comprises a sequence number of a next to-be-confirmed data unit in the data and a sequence number of a next to-be-sent data unit in the data; and
the instruction unit is further configured to instruct the first link to adjust a status variable in a receiving window of the RLC layer of the first link.

7. The splitting end apparatus according to any one of claims 1 to 5, wherein the splitting end apparatus further comprises a processing unit, and if a non-confirmation mode is used in the RLC layer of the first link, the processing unit is configured to adjust a status variable in a sending window of the RLC layer of the first link, wherein the status variable in the sending window comprises a sequence number of a next to-be-sent data unit in the data.

8. The splitting end apparatus according to any one of claims 1 to 3, wherein the splitting end apparatus further comprises a receiving unit, configured to receive a first link failure message, wherein the first link failure message comprises a first link failure message sent by the convergence end apparatus or a first link failure message sent by a sending apparatus corresponding to the first link; and
the splitting end apparatus further comprises a processing unit, configured to initiate a first link deletion process according to the first link failure message received by the receiving unit.

9. The splitting end apparatus according to any one of claims 1 to 8, wherein the data unit is a Packet Data Convergence PDCP PDCP data unit.

10. A convergence end apparatus, comprising:
a sending unit, configured to send, to a splitting end apparatus, a status report indicating a data unit that is not received by the convergence end apparatus, so that the splitting end apparatus instructs, according to the status report, a first link to stop transmitting the data unit to the convergence end apparatus, and retransmits the data unit to the convergence end apparatus by using a second link, wherein
the status report comprises indication information of a sequence number of the data unit, and data sent by the splitting end apparatus to the convergence end apparatus by using the first link comprises the data unit.

11. The convergence end apparatus according to claim 10, wherein the convergence end apparatus further comprises a determining unit, configured to: determine a sequence number of a to-be-received data unit in the data and a maximum sequence number of a data unit already received by the convergence end apparatus; and
if an interval between the sequence number of the to-be-received data unit and the maximum sequence number of the already received data unit meets a preset difference condition, determine that a data unit corresponding to the sequence number of the to-be-received data unit is the data unit that is not received by the convergence end apparatus.

12. The convergence end apparatus according to claim 10, wherein the convergence end apparatus further comprises a determining unit, configured to: determine a time during which a sequence number of a to-be-received data unit in the data is not updated; and
when the time during which the sequence number of the to-be-received data unit is not updated meets a preset time threshold, determine that a data unit corresponding to the sequence number of the to-be-received data unit is the data unit that is not received by the convergence end apparatus.

13. The convergence end apparatus according to any one of claims 10 to 12, wherein the convergence end apparatus further comprises a processing unit, configured to adjust a status variable in a receiving window of an RLC layer of the first link, wherein the status variable in the receiving window comprises a sequence number of a next to-be-received data unit in the data and the maximum sequence number of the already received data unit in the data.

14. The convergence end apparatus according to claim 13, wherein the splitting end apparatus further comprises an instruction unit, configured to instruct the first link to adjust a status variable in a sending window of the RLC layer of the first link.

15. The convergence end apparatus according to any one of claims 10 to 12, wherein the sending unit is further configured to send a first link failure message to the splitting end apparatus, so that the splitting end apparatus initiates a first link deletion process according to the status report and the first link failure message.

16. The convergence end apparatus according to any one of claims 10 to 15, wherein the data unit comprises a PDCP data unit.

17. A base station, wherein the base station comprises the splitting end apparatus according to any one of claims 1 to 9; or the base station comprises the convergence end apparatus according to any one of claims 10 to 16.

18. A terminal, wherein the terminal comprises the splitting end apparatus according to any one of claims 1 to 9; or the terminal comprises the convergence end apparatus according to any one of claims 10 to 16.

19. A data retransmission method, comprising:
sending, by a splitting end apparatus, data to a convergence end apparatus by using a first link;
instructing, by the splitting end apparatus, the first link to stop transmitting, to the convergence end apparatus, a data unit that is not received by the convergence end apparatus, wherein the data comprises the data unit; and
retransmitting, by the splitting end apparatus, the data unit to the convergence end apparatus by using a second link.

20. The method according to claim 19, further comprising:
determining a sequence number of a to-be-confirmed data unit in the data and a sequence number of a to-be-sent data unit in the splitting end apparatus; and
if an interval between the sequence number of the to-be-sent data unit and the sequence number of the to-be-confirmed data unit meets a preset difference condition, determining that a data unit corresponding to the sequence number of the to-be-confirmed data unit is the data unit that is not received by the convergence end apparatus.

21. The method according to claim 19, further comprising:
determining a time during which a sequence number of a to-be-confirmed data unit in the data is not updated; and
when the time during which the sequence number of the to-be-confirmed data unit is not updated meets a preset time threshold, determining that a data unit corresponding to the sequence number of the to-be-confirmed data unit is the data unit that is not received by the convergence end apparatus.

22. The method according to claim 19, further comprising:
receiving a status report sent by the convergence end apparatus, wherein the status report comprises indication information of a sequence number of the data unit that is not received by the convergence end apparatus and that is in the data; and
determining, according to the indication information, the data unit that is not received by the convergence end apparatus.

23. The method according to any one of claims 19 to 22, wherein the instructing the first link to stop transmitting, to the convergence end apparatus, a data unit that is not received by the convergence end apparatus comprises:
sending a link switching message to an RLC layer of the first link, wherein the link switching message comprises indication information of a maximum sequence number of all sequence numbers of data units, so that the RLC layer stops, according to the indication information of the maximum sequence number, transmitting a data unit corresponding to the maximum sequence number and a data unit whose sequence number is less than the maximum sequence number.

24. The method according to any one of claims 19 to 23, wherein if a confirmation mode is used in the RLC layer of the first link, the method further comprises:
adjusting a status variable in a sending window of the RLC layer of the first link, wherein the status variable in the sending window comprises a sequence number of a next to-be-confirmed data unit in the data and a sequence number of a next to-be-sent data unit in the data; and
instructing the first link to adjust a status variable in a receiving window of the RLC layer of the first link.

25. The method according to any one of claims 19 to 23, wherein if a non-confirmation mode is used in the RLC layer of the first link, the method further comprises:
adjusting a status variable in a sending window of the RLC layer of the first link, wherein the status variable in the sending window comprises a sequence number of a next to-be-sent data unit in the data.

26. The method according to any one of claims 19 to 21, wherein the method further comprises:
receiving a first link failure message; and initiating a first link deletion process according to the first link failure message.

27. The method according to any one of claims 19 to 26, wherein the data unit is a PDCP data unit.

28. A data retransmission method, comprising:
sending, by a convergence end apparatus to a splitting end apparatus, a status report indicating a data unit that is not received by the convergence end apparatus, so that the splitting end apparatus instructs, according to the status report, a first link to stop transmitting the data unit to the convergence end apparatus, and retransmits the data unit to the convergence end apparatus by using a second link, wherein
the status report comprises indication information of a sequence number of the data unit, and data sent by the splitting end apparatus to the convergence end apparatus by using the first link comprises the data unit.

29. The method according to claim 28, further comprising:
determining a sequence number of a to-be-received data unit in the data and a maximum sequence number of a data unit already received by the convergence end apparatus; and
if an interval between the sequence number of the to-be-received data unit and the maximum sequence number of the already received data unit meets a preset difference condition, determining that a data unit corresponding to the sequence number of the to-be-received data unit is the data unit that is not received by the convergence end apparatus.

30. The method according to claim 28, further comprising:
determining a time during which a sequence number of a to-be-received data unit in the data is not updated; and
when the time during which the sequence number of the to-be-received data unit is not updated meets a preset time threshold, determining that a data unit corresponding to the sequence number of the to-be-received data unit is the data unit that is not received by the convergence end apparatus.

31. The method according to any one of claims 28 to 30, further comprising:
adjusting a status variable in a receiving window of an RLC layer of the first link, wherein the status variable in the receiving window comprises a sequence number of a next to-be-received data unit in the data and the maximum sequence number of the already received data unit in the data.

32. The method according to claim 31, further comprising:
instructing the first link to adjust a status variable in a sending window of the RLC layer of the first link.

33. The method according to any one of claims 28 to 30, further comprising:
sending a first link failure message to the splitting end apparatus, so that the splitting end apparatus initiates a first link deletion process according to the status report and the first link failure message.

34. The method according to any one of claims 28 to 33, wherein the data unit comprises a PDCP data unit.
